(19) Europäisches Patentamt / European Patent Office / Office européen des brevets

(11) **EP 4 256 377 B1**

(12) **EUROPÄISCHE PATENTSCHRIFT**

(45) Veröffentlichungstag und Bekanntmachung des Hinweises auf die Patenterteilung:
**10.09.2025   Patentblatt 2025/37**

(21) Anmeldenummer: **21847928.5**

(22) Anmeldetag: **23.11.2021**

(51) Internationale Patentklassifikation (IPC):
**G01S 15/87** *(2006.01)*       **G01S 15/931** *(2020.01)*
**G01S 15/66** *(2006.01)*       **G01S 15/58** *(2006.01)*

(52) Gemeinsame Patentklassifikation (CPC):
**G01S 15/931; G01S 15/66; G01S 15/87;**
G01S 15/58; G01S 2015/935; G01S 2015/936

(86) Internationale Anmeldenummer:
**PCT/DE2021/200198**

(87) Internationale Veröffentlichungsnummer:
**WO 2022/117161 (09.06.2022 Gazette 2022/23)**

(54) **VERFAHREN ZUR ERKENNUNG VON PARKLÜCKEN MITTELS ULTRASCHALLSENSOREN**

METHOD FOR IDENTIFYING PARKING SPACES BY MEANS OF ULTRASONIC SENSORS

PROCÉDÉ D'IDENTIFICATION DE PLACES DE STATIONNEMENT À L'AIDE DE CAPTEURS ULTRASONORES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:  **03.12.2020   DE 102020215254**

(43) Veröffentlichungstag der Anmeldung:
**11.10.2023   Patentblatt 2023/41**

(73) Patentinhaber: **AUMOVIO Autonomous Mobility Germany GmbH**
**85057 Ingolstadt (DE)**

(72) Erfinder:
• **SULEIMAN, Wassim**
  **90411 Nürnberg (DE)**
• **BROWN, Christopher**
  **90411 Nürnberg (DE)**

(74) Vertreter: **Aumovio Corporation**
**Continental Automotive**
**Technologies GbH**
**Putzbrunner Straße 69**
**81739 München (DE)**

(56) Entgegenhaltungen:
EP-A1- 2 216 236          EP-A1- 2 293 102
EP-A1- 2 899 076          DE-A1- 10 310 214
DE-A1- 102005 038 524     DE-A1- 102019 111 569

**Beschreibung**

Die Erfindung betrifft ein Verfahren zur Erkennung von Parklücken mittels einem oder mehreren Ultraschallsensoren.

Es ist bekannt, Umgebungsinformationen im Bereich eines Fahrzeugs mittels Ultraschallsensoren zu erfassen, beispielsweise um beim Einparken den Abstand zu anderen Objekten zu erfassen.

Ebenfalls ist es bekannt, eine Parklückenerkennung basierend auf Informationen von mehreren Ultraschallsensoren durch Trilateration durchzuführen. Mittels der Trilateration ist es möglich, nicht nur den Abstand eines Objekts, sondern auch die Raumrichtung, in der sich das Objekt befindet, zu bestimmen.

Nachteilig an den bekannten Verfahren zur Parklückenerkennung ist, dass diese rechenaufwändig sind und dass die Parklückenerkennung aufgrund von Ungenauigkeiten des Odometriesystems und Rauschen fehleranfällig ist.

Ebenso ist aus DE 10 2019 111569 A1 bekannt, in einem Fahrzeugumfeld detektierte Objektpunkte mittels DBSCAN über einen Radius um den jeweiligen Objektpunkt zu clustern.

Ausgehend hiervon ist es Aufgabe der Erfindung, ein Verfahren zur Erkennung von Parklücken mittels einem oder mehreren Ultraschallsensoren anzugeben, das einen geringen Rechen- und Speicheraufwand erfordert und eine geringe Fehleranfälligkeit aufweist.

Die Aufgabe wird durch ein Verfahren mit den Merkmalen des unabhängigen Patentanspruchs 1 gelöst. Bevorzugte Ausführungsformen sind Gegenstand der Unteransprüche. Ein System zur Erkennung von Parklücken mittels einem oder mehreren Ultraschallsensoren ist Gegenstand des nebengeordneten Patentanspruchs 7 und ein Fahrzeug mit einem solchen System ist Gegenstand des nebengeordneten Patentanspruchs 12.

Gemäß einem ersten Aspekt bezieht sich die Erfindung auf ein Verfahren zur Erkennung von Parklücken mittels zumindest eines Ultraschallsensors, der an einem Fahrzeug vorgesehen ist. Das Verfahren umfasst die folgenden Schritte:

Zunächst wird eine Detektionsliste in einer Speichereinheit angelegt,

wobei die Detektionsliste für empfangene reflektierte Signalanteile von Ultraschallsignalen (nachfolgend auch als Echo oder Ultraschallecho bezeichnet) jeweils einen Listenbereich bezüglich des Ortes, an dem das Echo aufgetreten ist und einen Listenbereich für einen Nachbarschaftsindikator aufweist, wobei der Nachbarschaftsindikator Informationen bezüglich der Anzahl von Nachbarechos, die in einem definierten Nachbarschaftsbereich des Echos aufgetreten sind, bereitstellt. Die in der Detektionsliste einzutragenden Orte geben damit die örtliche Position an, an der die Reflexion aufgetreten ist, die das Echo hervorgerufen hat.

Es wird ein Ultraschallsignal durch einen Ultraschallsensor des Fahrzeugs ausgesendet. Hierbei kann lediglich ein einziger Ultraschallsensor ein Ultraschallsignal senden oder es können gleichzeitig oder zeitlich hintereinander mehrere Ultraschallsensoren jeweils Ultraschallsignale aussenden.

Anschließend wird ein reflektierter Signalanteil des Ultraschallsignals durch den Ultraschallsensor empfangen. Der reflektierte Signalanteil kann dabei entweder von demselben Ultraschallsensor empfangen werden, der das Ultraschallsignal gesendet hat oder von einem anderen Ultraschallsensor (sog. Kreuz-Echo).

Anschließend wird der Azimutwinkel bestimmt, aus dem das Echo empfangen wurde. Der Azimutwinkel ist dabei ein in einer horizontalen Ebene gemessener Winkel, der sich zwischen der Fahrzeuglängsachse bzw. einer Parallelen zu dieser Fahrzeuglängsachse und der Verbindungsgeraden zwischen dem Ultraschallsensor und dem Reflexionsort, an dem die Reflexion, die das Ultraschallecho erzeugt, stattgefunden hat, ergibt. Der Azimutwinkel öffnet sich dabei vorzugsweise in Richtung der Fahrzeugvorderseite.

Nach der Ermittlung des Azimutwinkels wird die örtliche Position, an der die das Echo erzeugende Reflexion stattgefunden hat, basierend auf der Laufzeit des Ultraschallsignals zwischen dem Aussenden des Ultraschallsignals und Empfangen des Echos und dem Azimutwinkel bestimmt.

Anschließend erfolgt eine Modifikation der Detektionsliste. Dabei werden basierend auf einer Nachbarschaftsregel in der Detektionsliste enthaltene Nachbarechos des empfangenen Echos bestimmt. Für jedes erkannte Nachbarecho wird der Nachbarschaftsindikator des jeweiligen erkannten Nachbarechos um einen Inkrementalwert erhöht.

Zudem wird ein Eintrag bezüglich des empfangenen Echos zu der Detektionsliste hinzugefügt, wobei der Eintrag Informationen bezüglich der örtlichen Position, an dem die das Echo erzeugende Reflexion stattgefunden hat, enthält und einen Nachbarschaftsindikator aufweist, wobei der Nachbarschaftsindikator einen Wert aufweist, der der Anzahl der aufgrund der Nachbarschaftsregel erkannten Nachbarechos entspricht.

Zuletzt werden die Werte der Nachbarschaftsindikatoren der Detektionsliste mit einem Schwellwert verglichen und es wird eine Parklückenerkennung basierend auf denjenigen Echos durchgeführt, deren Nachbarschaftsindikator größer als der Schwellwert ist.

Es versteht sich, dass die vorbeschriebenen Schritte zumindest teilweise iterativ ausgeführt werden, um eine hinreichende Menge an Echos von Objekten in der Umgebung des Fahrzeugs zu erhalten und basierend darauf eine verlässliche Parklückenerkennung durchzuführen.

Der technische Vorteil des erfindungsgemäßen Verfahrens besteht darin, dass eine im Hinblick auf Rechenleistung und Speicherbedarf verbesserte Erkennung von für einen Parkvorgang freien Bereichen in der Umgebung des Fahrzeugs ermöglicht wird. Das Verfahren ist dabei unempfindlich gegenüber dem Rau-

schen des Ultraschallsensors und die Falsch-Positiv-Rate kann durch die Filterung der Detektionen basierend auf den bereits erkannten Nachbarechos minimiert werden.

**[0018]** Gemäß einem Ausführungsbeispiel wird der Azimutwinkel basierend auf der Radialgeschwindigkeit des Fahrzeugs relativ zu einem Objekt, an dem die Reflexion auftritt, bestimmt. Der Unterschied zwischen der Radialgeschwindigkeit des Fahrzeugs in Richtung des Objekts (radial in Bezug auf die kreissegmentweise Ausbreitung des Ultraschallsignals ausgehend vom Ultraschallsensor) und der Fahrzeuggeschwindigkeit in Bewegungsrichtung des Fahrzeugs ist ein Maß für den Azimutwinkel, der sich zwischen der Linie Ultraschallsensor - reflektierendes Objekt und einer parallel zur Bewegungsrichtung des Fahrzeugs verlaufenden Linie erstreckt. Damit kann aus der Radialgeschwindigkeit auf den Azimutwinkel rückgeschlossen werden.

**[0019]** Gemäß einem Ausführungsbeispiel wird die Radialgeschwindigkeit des Fahrzeugs basierend auf der Frequenzänderung des empfangenen Echos aufgrund des Doppler-Effekts ermittelt. Die Doppler-Frequenzänderung ist ein Maß für die Radialgeschwindigkeit des Fahrzeugs in Bezug auf das reflektierende Objekt. Dabei ist die Frequenzänderung umso größer, je größer die Radialgeschwindigkeit ist.

**[0020]** Gemäß einem weiteren Ausführungsbeispiel wird die Radialgeschwindigkeit des Fahrzeugs durch zeitliches Nachverfolgen mehrerer Echos ermittelt. Dieses Nachverfolgen bzw. Tracken der Echos kann beispielsweise mittels eines Kalman-Filters erfolgen. Die zeitliche Änderung des Ortes der Reflexion relativ zur Fahrzeugposition lässt einen Rückschluss auf die Radialgeschwindigkeit zu.

**[0021]** Gemäß einem weiteren Ausführungsbeispiel wird die örtliche Position, an der die Reflexion, die das Echo erzeugt, stattgefunden hat, durch Koordinaten angegeben, die sich auf eine ortsfeste, nicht mit dem Fahrzeug mitbewegte Position beziehen. Die Koordinaten der örtlichen Position des Echos sind damit geographische Koordinaten, die einen festen Punkt auf der Erdoberfläche im Umgebungsbereich des Fahrzeugs angeben. Um zu diesen ortsfesten Koordinaten zu gelangen, können Informationen des Odometriesystems des Fahrzeugs verwendet werden. Mittels dieser Odometrieinformationen ist es möglich, Positionsinformationen, die sich auf das Fahrzeug beziehen und damit mit dem Fahrzeug mitbewegt werden, in ortsfeste Positionsinformationen bzw. Koordinaten zu überführen.

**[0022]** Gemäß einem weiteren Ausführungsbeispiel wird der Nachbarschaftsbereich durch einen Kreis mit einem vorgegebenen Radius um die örtliche Position, an der die Reflexion, die das Echo erzeugt, stattgefunden hat, festgelegt. Dadurch kann auf geometrisch einfache Weise eine Nachbarschaftsregel bereitgestellt werden, basierend auf der bestimmt werden kann ob bzw. welche Echos in Nachbarschaftsbeziehung zu dem jeweiligen aktuell empfangenen Echo stehen.

**[0023]** Erfindungsgemäß wird der Nachbarschaftsindikator bei jedem Nachbarecho, das sich im Nachbarschaftsbereich zu einem empfangenen Echo befindet, um einen variablen Wert erhöht, wobei der variable Wert vom Abstand des empfangenen Echos zu dem jeweiligen Nachbarecho und/oder von der Amplitude des Echos abhängt. Damit ist es möglich eine Gewichtung der Nachbarschaftsbeziehung vorzunehmen, beispielsweise solche Nachbarechos höher zu gewichten, die näher an dem aktuell empfangenen Echo liegen.

**[0024]** Gemäß einem weiteren Aspekt betrifft die Erfindung ein System zur Erkennung von Parklücken umfassend zumindest einen Ultraschallsensor und eine Recheneinheit, die zur Auswertung der vom Ultraschallsensor bereitgestellten Informationen ausgebildet ist. Das System ist dazu ausgebildet, folgende Schritte zu vollziehen:

a) Anlegen einer Detektionsliste in einer Speichereinheit, wobei die Detektionsliste für empfangene Echos jeweils einen Listenbereich für den Ort, an dem das Echo aufgetreten ist und einen Listenbereich für einen Nachbarschaftsindikator aufweist, wobei der Nachbarschaftsindikator Informationen bezüglich der Anzahl von Nachbarechos, die in einem definierten Nachbarschaftsbereich des Echos aufgetreten sind, bereitstellt;

b) Aussenden eines Ultraschallsignals durch einen Ultraschallsensor des Fahrzeugs;

c) Empfangen eines Echos in Form eines reflektierten Signalanteils des Ultraschallsignals durch den Ultraschallsensor;

d) Bestimmen des Azimutwinkels, aus dem das Echo empfangen wurde;

e) Bestimmen der örtlichen Position, an der die Reflexion, die das Echo erzeugt, stattgefunden hat, basierend auf der Laufzeit des Ultraschallsignals zwischen dem Aussenden des Ultraschallsignals und Empfangen des Echos und dem Azimutwinkel;

f) Modifizieren der Detektionsliste durch:

- Bestimmen der in der Detektionsliste enthaltenen Nachbarechos des empfangenen Echos basierend auf einer Nachbarschaftsregel;
- Für jedes erkannte Nachbarecho, Erhöhen des Nachbarschaftsindikators des jeweiligen erkannten Nachbarechos um einen Inkrementalwert;
- Hinzufügen eines Eintrags bezüglich des empfangenen Echos zu der Detektionsliste, wobei der Eintrag Informationen bezüglich der örtlichen Position, an dem die Reflexion, die das Echo erzeugt, stattgefunden hat, enthält und einen Nachbarschaftsindikator aufweist, wobei der Nachbarschaftsindikator einen Wert aufweist, der der Anzahl der aufgrund der Nachbarschaftsregel erkannten Nachbarechos entspricht;

g) Vergleichen der Werte der Nachbarschaftsindikatoren der Detektionsliste mit einem Schwellwert und Durchführen der Parklückenerkennung basierend auf denjenigen Echos, deren Nachbarschaftsindikator größer als der Schwellwert ist.

Gemäß einem Ausführungsbeispiel des Systems ist die Recheneinheit dazu ausgebildet, den Azimutwinkel basierend auf der Radialgeschwindigkeit des Fahrzeugs relativ zu einem Objekt, an dem die das Echo erzeugende Reflexion auftritt, zu bestimmen. Der Unterschied zwischen der Radialgeschwindigkeit des Fahrzeugs in Richtung des Objekts (radial in Bezug auf die kreissegmentweise Ausbreitung des Ultraschallsignals ausgehend vom Ultraschallsensor) und der Fahrzeuggeschwindigkeit in Bewegungsrichtung des Fahrzeugs ist ein Maß für den Azimutwinkel, der sich zwischen der Linie Ultraschallsensor - reflektierendes Objekt und einer parallel zur Bewegungsrichtung des Fahrzeugs verlaufenden Linie erstreckt. Damit kann aus der Radialgeschwindigkeit auf den Azimutwinkel rückgeschlossen werden.

Gemäß einem Ausführungsbeispiel des Systems ist die Recheneinheit dazu ausgebildet, die Radialgeschwindigkeit des Fahrzeugs basierend auf der Frequenzänderung des empfangenen Echos aufgrund des Doppler-Effekts zu ermitteln. Die Doppler-Frequenzänderung ist ein Maß für die Radialgeschwindigkeit des Fahrzeugs in Bezug auf das reflektierende Objekt. Dabei ist die Frequenzänderung umso größer, je größer die Radialgeschwindigkeit ist.

Gemäß einem Ausführungsbeispiel des Systems ist die Recheneinheit dazu ausgebildet, die Radialgeschwindigkeit des Fahrzeugs durch zeitliches Nachverfolgen mehrerer Echos zu ermitteln. Dieses Nachverfolgen bzw. Tracken der Echos kann beispielsweise mittels eines Kalman-Filters erfolgen. Die zeitliche Änderung des Ortes der Reflexion relativ zur Fahrzeugposition lässt einen Rückschluss auf die Radialgeschwindigkeit zu.

Gemäß einem Ausführungsbeispiel des Systems ist die Recheneinheit dazu ausgebildet, die örtliche Position, an der die Reflexion, die das Echo erzeugt, stattgefunden hat, durch Koordinaten anzugeben, die sich auf eine ortsfeste, nicht mit dem Fahrzeug mitbewegte Position beziehen. Die Koordinaten der örtlichen Position des Echos sind damit geographische Koordinaten, die einen festen Punkt auf der Erdoberfläche im Umgebungsbereich des Fahrzeugs angeben. Um zu diesen ortsfesten Koordinaten zu gelangen, können Informationen des Odometriesystems des Fahrzeugs verwendet werden. Mittels dieser Odometrieinformationen ist es möglich, Positionsinformationen, die sich auf das Fahrzeug beziehen und damit mit dem Fahrzeug mitbewegte Positionsinformationen sind, in ortsfeste Positionsinformationen bzw. Koordinaten zu überführen.

Gemäß einem Ausführungsbeispiel des Systems ist die Recheneinheit dazu ausgebildet, den Nachbarschaftsindikator bei jedem Nachbarecho, das sich im Nachbarschaftsbereich zu einem empfangenen Echo befindet, um einen variablen Wert zu erhöhen, wobei der variable Wert vom Abstand des empfangenen Echos zu dem jeweiligen Nachbarecho und/oder von der Amplitude des Echos abhängt. Die Erhöhung mit einem variablen Wert erlaubt es, eine Gewichtung der Nachbarschaftsbeziehung vorzunehmen, beispielsweise solche Nachbarechos höher zu gewichten, die näher an dem aktuell empfangenen Echo liegen.

Gemäß einem nochmals weiteren Aspekt betrifft die Erfindung ein Fahrzeug mit einem System zur Erkennung von Parklücken gemäß einem der vorher beschriebenen Ausführungsbeispiele.

Die Ausdrücke "näherungsweise", "im Wesentlichen" oder "etwa" bedeuten im Sinne der Erfindung Abweichungen vom jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren.

Die Erfindung wird im Folgenden anhand der Figuren an Ausführungsbeispielen näher erläutert. Es zeigen:

Fig. 1 beispielhaft und schematisch ein Fahrzeug mit mehreren Ultraschallsensoren beim Vorbeifahren an einer Längsparksituation;

Fig. 2 beispielhaft eine Darstellung einer Vielzahl von empfangenen, nicht einer Filterung unterzogenen Ultraschall-Echos im Umgebungsbereich eines Fahrzeugs, wobei die Echos in einer zweidimensionalen Karte lagemäßig eingetragen sind;

Fig. 3 beispielhaft eine Darstellung analog zur Fig. 2, wobei die Ultraschall-Echos einer auf Nachbarschaftsbeziehungen beruhenden Filterung unterzogen wurden;

Fig. 4 beispielhaft ein Ablaufdiagramm eines Verfahrens zur Filterung von Ultraschallechos basierend auf Nachbarschaftsbeziehungen;

Fig. 5 beispielhaft eine Darstellung von empfangenen Echos und einer Nachbarschaftsregel (dargestellt durch den strichliert gezeichneten Kreis), mittels der ein Teil der Echos als Nachbarechos klassifizierbar sind; und

Fig. 6 beispielhaft ein Ablaufdiagramm, das die Schritte eines Verfahrens zur Erkennung von Parklücken im Umgebungsbereich des Fahrzeugs verdeutlicht.

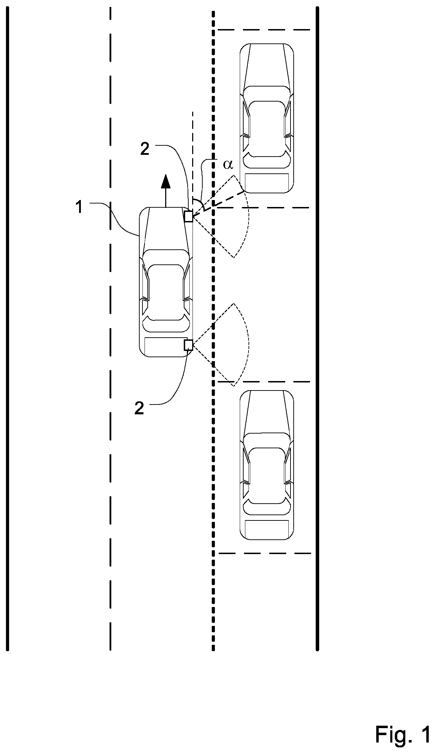

Figur 1 zeigt beispielhaft eine Einparksituation, bei der, wie durch den Fahrtrichtungspfeil angedeutet, ein Fahrzeug 1 an mehreren Längsparkplätzen vorbeifährt. Dabei ist eine Parklücke, die sie zwischen zwei Fahrzeugen befindet, frei. Es versteht sich, dass die vorliegende Erfindung nicht nur auf Längsparksituationen beschränkt ist, sondern ebenfalls in Querparksituationen angewendet werden kann.

Das Fahrzeug 1 weist mehrere Ultraschallsensoren 2 auf, mittels denen Umgebungsinformationen erfassbar sind. Im gezeigten Ausführungsbeispiel sind zwei Ultraschallsensoren 2 gezeigt. Es versteht sich, dass am Fahrzeug 1 mehr als zwei Ultraschallsensoren vorgesehen sein können. Insbesondere können die Ultraschallsensoren 2 derart angeordnet sein, dass Umgebungsinformationen vor und hinter dem Fahrzeug 1 und zu beiden Seiten des Fahrzeugs 1 ermittelt werden können. Insbesondere sind die Ultraschallsensoren 2 dazu ausgebildet, in einem Sendezyklus ein Ultraschallsignal auszusenden und in einem daran anschließenden Empfangszyklus Signalanteile des Ultraschallsignals, die an Objekten in der Umgebung des Fahrzeugs 1 reflektiert wurden, zu empfangen. Die Zeitspanne zwischen dem Aussenden des Ultraschallsignals und dem Empfangen des reflektierten Signalanteils ist ein Maß für den Abstand des Objekts zu dem Ultraschallsensor 2. Dadurch können Informationen über Objekte in Umgebungsbereich des Fahrzeugs 1 ermittelt werden.

Neben dem Abstand kann mittels der Informationen, die die Ultraschallsensoren 2 bereitstellen, auch der Azimutwinkel eines Echos bestimmt werden, d.h. der Winkel, in dem die Reflexion, die zu dem empfangenen Echo führt, erfolgt.

Der Azimutwinkel kann beispielsweise durch basierend auf der Radialgeschwindigkeit bestimmt werden, die das Fahrzeug in Bezug auf das Objekt, an dem die Reflexion des Ultraschallsignals auftritt, hat. Die Radialgeschwindigkeit kann beispielsweise basierend auf der Dopplerfrequenzverschiebung des Ultraschallsignals bestimmt werden. Beispielsweise kann der Ultraschallsensor 2 Informationen bezüglich der Dopplerfrequenzverschiebung bereitstellen. Alternativ ist es möglich, dass die Radialgeschwindigkeit durch ein Nachverfolgen bzw. Tracken von Ultraschallechos über einen gewissen Zeitraum berechnet wird. Das Nachverfolgen bzw. Tracken von Ultraschallechos kann beispielsweise mittels eines Kalman-Filters vollzogen werden.

Der Azimutwinkel kann beispielsweise wie folgt berechnet werden:

$$\alpha = \cos^{-1} \frac{V_r}{V_s}$$

wobei gilt:

α: Azimutwinkel;
$v_r$: Radialgeschwindigkeit;

$v_s$: Sensorgeschwindigkeit/Fahrzeuggeschwindigkeit.

Der Vektor der Radialgeschwindigkeit $v_r$ ist mit einer Vektorkomponente in Richtung des Vektors der Sensorgeschwindigkeit bzw. Fahrzeuggeschwindigkeit $v_s$ gerichtet, so dass sich der Winkel zwischen der Fahrzeuglängsachse und dem Objekt erstreckt, an dem die Reflexion auftritt und sich in Richtung der Fahrzeugvorderseite hin öffnet.

Wenn die Dopplerfrequenzverschiebung durch den Sensor bereitgestellt wird, kann die Radialgeschwindigkeit $v_r$ wie folgt berechnet werden:

$$v_r = c * \frac{f_D}{f_0}$$

wobei gilt:

c: Ausbreitungsgeschwindigkeit des Ultraschallsignals;
$f_d$: Dopplerfrequenz;
$f_0$: Trägerfrequenz des Ultraschallsignals.

Basierend auf dem Azimuthwinkel und dem Abstand der Reflexionsstelle vom Ultraschallsensor 2 kann unter Zuhilfenahme von Informationen des Fahrzeugodometriesystems die x-y-Koordinate ermittelt werden, an der die Reflexion aufgetreten ist. Bei den x-y-Koordinaten handelt es sich dabei insbesondere um feste, stationäre Ortskoordinaten, die nicht mit dem Fahrzeug mitbewegt sind.

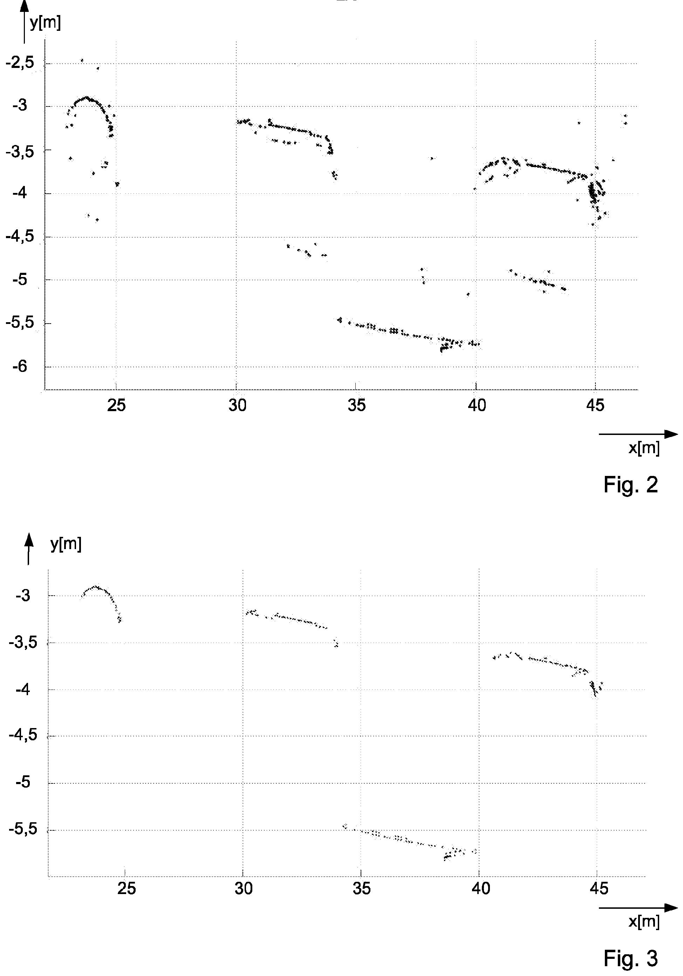

Figur 2 zeigt in einem x-y-Diagramm einen Umgebungsbereich des Fahrzeugs, in dem mittels der einzelnen Punkte Detektionen eingetragen sind, die durch die Ultraschallsensoren 2 des Fahrzeugs 1 ermittelt wurden. Die jeweiligen x-y-Koordinaten beziehen sich dabei auf feste, stationäre Ortskoordinaten, die nicht mit dem Fahrzeug mitbewegt sind.

Wie in Fig. 2 zu sehen, enthält die Darstellung eine Vielzahl von Falsch-Positiv-Echos, d.h. solche die durch Rauschen oder Falschdetektionen entstanden sind. Diese Falsch-Positiv-Echos zeichnen sich insbesondere dadurch aus, dass diese sind an Orten befinden, in deren Umgebung sich weniger bzw. keine anderen Echos befinden (sog. "Ausreißer").

Fig. 3 hingegen zeigt ein x-y-Diagramm des Umgebungsbereichs des Fahrzeugs 1 analog zu Fig. 2, wobei eine Filterung vollzogen wurde, die dazu führt, dass die Anzahl der Falsch-Positiv-Echos signifikant reduziert wurde und dadurch die Konturen der Objekte, an denen die Reflexionen entstanden sind, deutlicher zu erkennen sind.

Da Verfahren zur Filterung der Echos, um die Anzahl der Falsch-Positiv-Echos zu reduzieren, wird nachfolgend anhand eines Ausführungsbeispiels näher beschrieben.

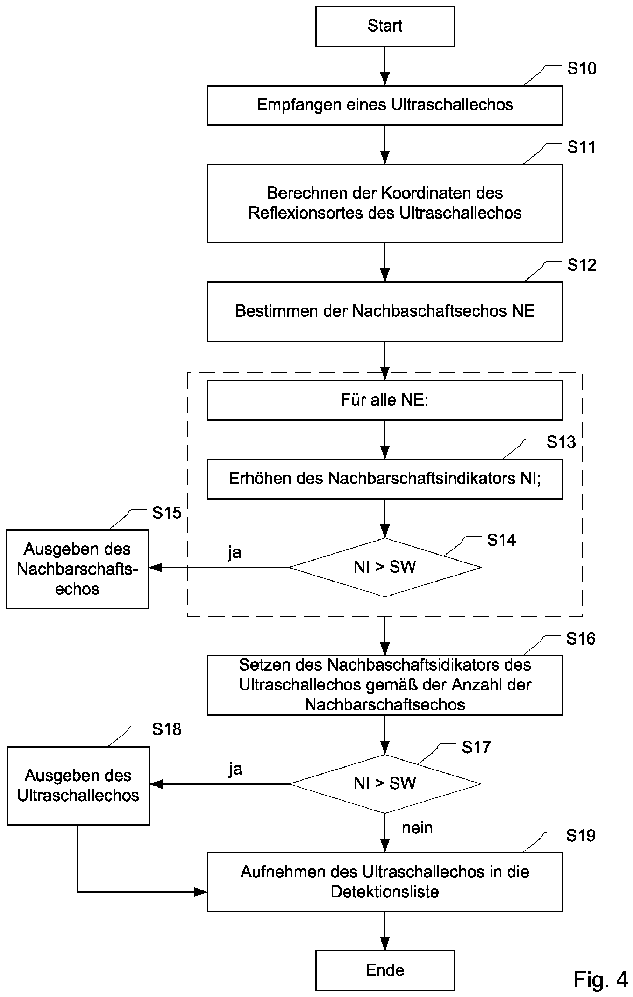

Fig. 4 zeigt beispielhaft ein Ablaufdiagramm eines Filteralgorithmus. Der Filteralgorithmus wird nachfolgend auf Basis des Ablaufdiagramms beschrieben.

Nach dem Starten des Algorithmus wird zunächst eine Detektionsliste initialisiert und ein Schwellwert festgelegt. Die Detektionsliste ist vorzugsweise derart konfiguriert, dass diese Einträge zu den Koordinaten, an denen eine das Echo erzeugende Reflexion stattgefunden hat, und einen Eintrag bezüglich eines Nachbarschaftsindikators NI aufnehmen kann.

Anschließend wird ein Ultraschallecho empfangen (S10). Das Ultraschallecho resultiert von einem ausgesandten Ultraschallsignal, das an einem Objekt reflektiert und dadurch ein Signalanteil des Ultraschallsignals in Richtung des Ultraschallsensors 2 zurückgesandt wurde.

Anschließend werden die Koordinaten des Reflexionsortes des Ultraschallechos berechnet (S11). Diese Koordinaten sind vorzugsweise zweidimensionale Koordinaten, die sich auf eine horizontale Ebene, in der sich das Fahrzeug bewegt, beziehen. In anderen Worten geben die Koordinaten eine Position in horizontaler Längs- und Querrichtung, nicht aber in vertikaler Richtung an. Die Berechnung der Koordinaten erfolgt beispielsweise basierend auf der Radialgeschwindigkeit $v_r$, die beispielsweise wie zuvor beschrieben, mittels der Bestimmung des Azimutwinkels zwischen der Verbindungslinie Ultraschallsensor-Reflexionsort und der Fahrzeugbewegungsrichtung ermittelt wird. Der Azimutwinkel ist dabei ein Winkel, der sich in Richtung der Fahrzeugvorderseite bzw. in Richtung der Bewegungsrichtung des Fahrzeugs 1 öffnet.

Alternativ werden dreidimensionale Koordinaten des Reflexionsortes berechnet, d.h. das Verfahren kann nicht nur im zweidimensionalen, sondern auch im dreidimensionalen Raum angewendet werden. Auch können weitere Informationen erfasst werden, die einen Rückschluss auf den Reflexionsort zulassen, beispielsweise Amplitude, Dopplerfrequenz etc.

Nach dem Berechnen des Reflexionsorts werden die Nachbarechos NE des empfangenen Ultraschallechos bestimmt (S12). Die Nachbarechos NE sind beispielsweise diejenigen Echos, die in Bezug auf das gerade empfangene Ultraschallecho eine bestimmte Nachbarschaftsregel erfüllen. Die Nachbarschaftsregel gibt beispielsweise an, in welchem Bereich ein Echo liegen muss, um als Nachbarecho NE zu gelten.

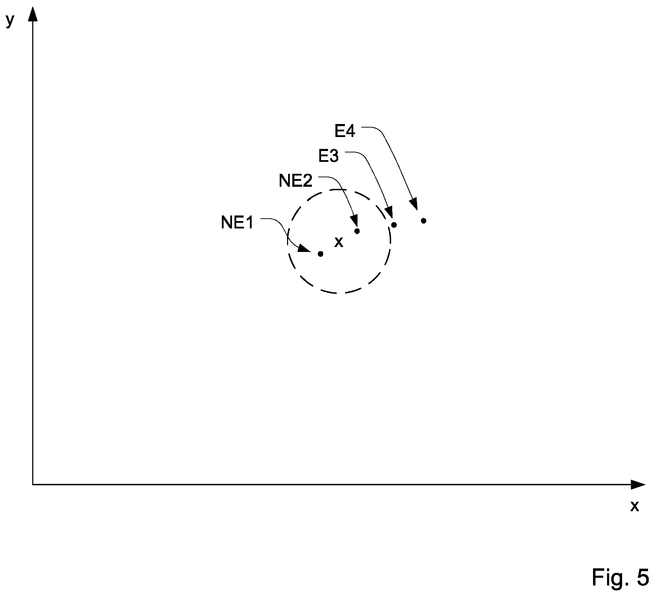

Fig. 5 veranschaulicht beispielsweise eine Nachbarschaftsregel mittels eines Kreises mit einem vordefinierten Radius, in dessen Mittelpunkt sich ein gerade empfangenes und lokalisiertes Ultraschallecho befindet. Durch den Kreis wird definiert, dass die Nachbarechos NE1 und NE2 die Nachbarschaftsregel erfüllen, d.h. die Nachbarechos NE1 und NE2 liegen innerhalb des Kreises. Die Echos E3 und E4 hingegen erfüllen nicht die Nachbarschaftsregel und gelten daher nicht als Nachbarechos.

Es versteht sich, dass Figur 5 lediglich ein Ausführungsbeispiel illustriert. Wie zuvor beschrieben, können unterschiedliche Nachbarschaftsregeln verwendet werden, um Nachbarechos zu definieren. So kann beispielsweise durch eine andere Nachbarschaftsregel ein ellipsenartiger Bereich definiert werden, der für die Festlegung von Nachbarechos herangezogen wird. Die Definition der Nachbarschaftsregel kann insbesondere abhängig von dem verwendeten Ultraschallsensor und dessen spezifischen Eigenschaften erfolgen.

Nachdem alle Nachbarechos zu dem aktuell empfangenen Echo ermittelt wurden, wird beispielsweise in einer Schleife für jedes erkannte Nachbarecho dessen Nachbarschaftsindikator NI um einen Inkrementalwert erhöht (S13). Der Inkrementalwert ist erfindungsgemäß ein variabler Wert, der vom Abstand zwischen dem aktuell empfangenen Echo und dem Nachbarecho NE und/oder von der Signalstärke des empfangenen Echos abhängt.

Anschließend wird für jedes Nachbarecho NE geprüft, ob deren Nachbarschaftsindikator NI den Schwellwert SW überschritten hat (S14).

Wenn der Nachbarschaftsindikator NI des jeweiligen Nachbarechos NE den Schwellwert SW überschreitet, wird das Nachbarecho NE ausgegeben und beispielsweise in eine finale Detektionsliste geschrieben (S15).

Nach dem Erhöhen der Nachbarschaftsindikatoren NI der Nachbarechos NE wird der Nachbarschaftsindikator NI des empfangenen Ultraschallechos (d.h. des Ultraschallechos, das die Routine ausgelöst hat) gesetzt (S16).

Anschließend wird geprüft, ob der gesetzte Nachbarschaftsindikator NI größer ist als der Schwellwert SW (S17). Wenn der Nachbarschaftsindikator NI den Schwellwert SW überschreitet, wird das Echo ausgegeben und beispielsweise in eine finale Detektionsliste geschrieben (S18).

Unabhängig davon, ob der Nachbarschaftsindikator NI den Schwellwert SW überschreitet oder nicht, wird das empfangene Ultraschallecho (d.h. des Ultraschallechos, das die Routine ausgelöst hat) in die Detektionsliste aufgenommen (S19). Dadurch kann nachfolgend auch dieses Echo bezüglich der Nachbarschaftsbeziehung zu einem neu empfangenen Echo geprüft werden.

Die Parklückenerkennung kann dann basierend auf der finalen Detektionsliste, die lediglich gemäß den Nachbarschaftsbeziehungen gefilterte Echos enthält, vorgenommen werden.

Der vorbeschriebene Algorithmus wird vorzugsweise iterativ jeweils nach dem Empfang eines reflektierten Ultraschallsignals durchgeführt. Dabei können Empfangssignale mehrerer Ultraschallsensoren 2 für die Befüllung der Detektionsliste und/oder der finalen Detektionsliste herangezogen werden. Ebenso ist es möglich, dass Kreuz-Echos zwischen mehreren Ultraschallsensoren 2 zur Befüllung der Detektionsliste und/oder der finalen Detektionsliste herangezogen werden.

Dies bedeutet, dass auch ein reflektierter Signalanteil eines Ultraschallsignals, der von einem anderen Ultraschallsensor als dem sendenden Ultraschallsensor empfangen wird, für die Befüllung der Detektionsliste und/oder der finalen Detektionsliste herangezogen wird.

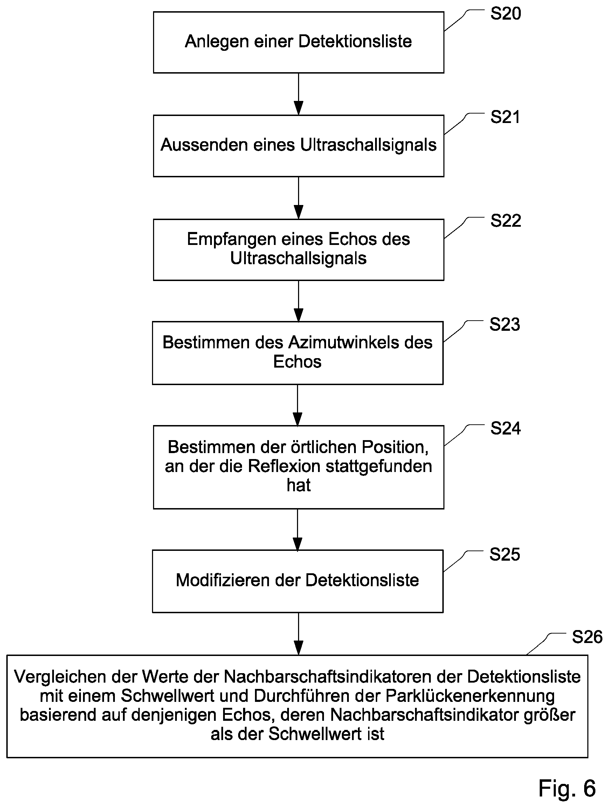

Fig. 6 zeigt in schematischer Darstellung die Schritte eines erfindungsgemäßen Verfahrens zur Erkennung von Parklücken mittels zumindest eines Ultraschallsensors 2 eines Fahrzeugs 1.

Zunächst wird eine Detektionsliste angelegt bzw. initialisiert (S20). Diese Detektionsliste kann Einträge zu Echos aufnehmen, wie beispielsweise Koordinaten des Entstehungsorts des Echos (Ort der Reflexion, die das Echo entstehen lässt), einen Nachbarschaftsindikator etc. Anschließend wird ein Ultraschallsignal durch einen Ultraschallsensor 2 des Fahrzeugs 1 ausgesendet (S21).

Daraufhin wird ein reflektierter Signalanteil des Ultraschallsignals (d.h. Ultraschallecho) durch den Ultraschallsensor 2 empfangen (S22). Der empfangende Ultraschallsensor kann gleich oder unterschiedlich zu dem sendenden Ultraschallsensor 2 sein.

Nach dem Empfang des reflektierten Signalanteil des Ultraschallsignals wird der Azimutwinkel bestimmt, aus dem das Ultraschallecho empfangen wird (S23).

Basierend auf diesem Azimutwinkel wird unter Zuhilfenahme des Abstands, den der Sensor zu dem Ort der Reflexion des Ultraschallsignals hat (bestimmt durch die Laufzeit des Ultraschallsignals zwischen Aussenden und Empfang), die örtliche Position berechnet, an der die Reflexion stattgefunden hat (S24).

Anschließend wird die Detektionsliste modifiziert (S25). Dabei werden die in der Detektionsliste enthaltenen Nachbarechos NE des empfangenen Echos basierend auf einer Nachbarschaftsregel bestimmt. Anschließend wird für jedes erkannte Nachbarecho der Nachbarschaftsindikator NI des jeweiligen erkannten Nachbarechos NE um einen Inkrementalwert erhöht.

Dann wird ein Eintrag bezüglich des empfangenen Echos zu der Detektionsliste hinzugefügt, wobei der Eintrag Informationen bezüglich der örtlichen Position, an dem die das Echo erzeugende Reflexion stattgefunden hat, enthält und einen Nachbarschaftsindikator aufweist, wobei der Nachbarschaftsindikator NI einen Wert aufweist, der der Anzahl der aufgrund der Nachbarschaftsregel erkannten Nachbarechos entspricht.

Zuletzt werden die Werte der Nachbarschaftsindikatoren der Detektionsliste mit einem Schwellwert verglichen und es wird eine Parklückenerkennung basierend auf denjenigen Echos, deren Nachbarschaftsindikator größer als der Schwellwert ist, durchgeführt (S26).

Die vorbeschriebenen Schritte des Aussendens des Ultraschallsignals (S21), Empfangen des Echos des Ultraschallsignals (S22), Bestimmen des Azimutwinkels des Echos (S23), Bestimmen der örtlichen Position des Echos (S24), Modifizieren der Detektionsliste (S25) und Vergleichen der Nachbarschaftsindikatoren der Detektionsliste mit einem Schwellwert können vorzugsweise mehrfach wiederholt werden, um eine Vielzahl von Einträgen in der Detektionsliste zu generieren, basierend auf denen eine verlässliche Parklückenerkennung möglich ist.

**Bezugszeichenliste**

1    Fahrzeug
2    Ultraschallsensor

α    Azimutwinkel
NE    Nachbarecho
NI    Nachbarschaftsindikator
SW    Schwellwert

**Patentansprüche**

1.    Verfahren zur Erkennung von Parklücken mittels zumindest eines Ultraschallsensors (2) eines Fahrzeugs (1) umfassend folgende Schritte:

a) Anlegen einer Detektionsliste in einer Speichereinheit, wobei die Detektionsliste für empfangene Echos jeweils einen Listenbereich für den Ort, an dem das Echo aufgetreten ist und einen Listenbereich für einen Nachbarschaftsindikator (NI) aufweist, wobei der Nachbarschaftsindikator (NI) Informationen bezüglich der Anzahl von Nachbarechos (NE), die in einem definierten Nachbarschaftsbereich des Echos aufgetreten sind, bereitstellt (S20);
b) Aussenden eines Ultraschallsignals durch den Ultraschallsensor (2) des Fahrzeugs (1) (S21);
c) Empfangen eines Echos in Form eines reflektierten Signalanteils des Ultraschallsignals durch den Ultraschallsensor (2) (S22);
d) Bestimmen des Azimutwinkels, aus dem das Echo empfangen wurde (S23);
e) Bestimmen der örtlichen Position, an der die das Echo erzeugende Reflexion stattgefunden hat, basierend auf der Laufzeit des Ultraschallsignals zwischen dem Aussenden des Ultraschallsignals und Empfangen des Echos und dem Azimutwinkel (S24);
f) Modifizieren der Detektionsliste (S25) durch:

1. Bestimmen der in der Detektionsliste enthaltenen Nachbarechos (NE) des empfangenen Echos basierend auf einer Nachbarschaftsregel;
2. Für jedes erkannte Nachbarecho (NE), Erhöhen des Nachbarschaftsindikators (NI) des jeweiligen erkannten Nachbarechos

(NE) um einen Inkrementalwert, wobei der Nachbarschaftsindikator (NI) bei jedem Nachbarecho (NE), das sich im Nachbarschaftsbereich zu einem empfangenen Echo befindet, um einen variablen Wert erhöht wird, wobei der variable Wert vom Abstand des empfangenen Echos zu dem jeweiligen Nachbarecho und/oder von der Amplitude des Echos abhängt;

3. Hinzufügen eines Eintrags bezüglich des empfangenen Echos zu der Detektionsliste, wobei der Eintrag Informationen bezüglich der örtlichen Position, an dem die das Echo erzeugende Reflexion stattgefunden hat, enthält und einen Nachbarschaftsindikator aufweist, wobei der Nachbarschaftsindikator (NI) einen Wert aufweist, der der Anzahl der aufgrund der Nachbarschaftsregel erkannten Nachbarechos entspricht;

g) Vergleichen der Werte der Nachbarschaftsindikatoren der Detektionsliste mit einem Schwellwert und Durchführen der Parklückenerkennung basierend auf denjenigen Echos, deren Nachbarschaftsindikator größer als der Schwellwert ist (S26).

2. Verfahren nach Anspruch 1, **dadurch gekennzeichnet, dass** der Azimutwinkel basierend auf der Radialgeschwindigkeit des Fahrzeugs (1) relativ zu einem Objekt, an dem die Reflexion auftritt, bestimmt wird.

3. Verfahren nach Anspruch 2, **dadurch gekennzeichnet, dass** die Radialgeschwindigkeit des Fahrzeugs (1) basierend auf der Frequenzänderung des empfangenen Echos aufgrund des Doppler-Effekts ermittelt wird.

4. Verfahren nach Anspruch 2, **dadurch gekennzeichnet, dass** die Radialgeschwindigkeit des Fahrzeugs (1) durch zeitliches Nachverfolgen mehrerer Echos ermittelt wird.

5. Verfahren nach einem der vorhergehenden Ansprüche, **dadurch gekennzeichnet, dass** die örtliche Position, an der die Reflexion, die das Echo erzeugt, stattgefunden hat, durch Koordinaten angegeben wird, die sich auf eine ortsfeste, nicht mit dem Fahrzeug (1) mitbewegte Position beziehen.

6. Verfahren nach einem der vorhergehenden Ansprüche, **dadurch gekennzeichnet, dass** der Nachbarschaftsbereich durch einen Kreis mit einem vorgegebenen Radius um die örtliche Position, an der die Reflexion, die das Echo erzeugt, stattgefunden hat, festgelegt wird.

7. System zur Erkennung von Parklücken umfassend zumindest einen Ultraschallsensor (2), eine Recheneinheit und eine Speichereinheit, die zur Auswertung der vom Ultraschallsensor (2) bereitgestellten Informationen ausgebildet ist, wobei das System dazu ausgebildet ist, folgende Schritte zu vollziehen:

a) Anlegen einer Detektionsliste in einer Speichereinheit, wobei die Detektionsliste für empfangene Echos jeweils einen Listenbereich für den Ort, an dem das Echo aufgetreten ist und einen Listenbereich für einen Nachbarschaftsindikator (NI) aufweist, wobei der Nachbarschaftsindikator (NI) Informationen bezüglich der Anzahl von Nachbarechos (NE), die in einem definierten Nachbarschaftsbereich des Echos aufgetreten sind, bereitstellt (S20);
b) Aussenden eines Ultraschallsignals durch einen Ultraschallsensor (2) des Fahrzeugs (1) (S21);
c) Empfangen eines Echos in Form eines reflektierten Signalanteils des Ultraschallsignals durch den Ultraschallsensor (2) (S22);
d) Bestimmen des Azimutwinkels, aus dem das Echo empfangen wurde (S23);
e) Bestimmen der örtlichen Position, an der die Reflexion, die das Echo erzeugt, stattgefunden hat, basierend auf der Laufzeit des Ultraschallsignals zwischen dem Aussenden des Ultraschallsignals und Empfangen des Echos und dem Azimutwinkel (S24);
f) Modifizieren der Detektionsliste (S25) durch:

1. Bestimmen der in der Detektionsliste enthaltenen Nachbarechos (NE) des empfangenen Echos basierend auf einer Nachbarschaftsregel;
2. Für jedes erkannte Nachbarecho (NE), Erhöhen des Nachbarschaftsindikators (NI) des jeweiligen erkannten Nachbarechos (NE) um einen Inkrementalwert, wobei der Nachbarschaftsindikator (NI) bei jedem Nachbarecho (NE), das sich im Nachbarschaftsbereich zu einem empfangenen Echo befindet, um einen variablen Wert erhöht wird, wobei der variable Wert vom Abstand des empfangenen Echos zu dem jeweiligen Nachbarecho und/oder von der Amplitude des Echos abhängt;
3. Hinzufügen eines Eintrags bezüglich des empfangenen Echos zu der Detektionsliste, wobei der Eintrag Informationen bezüglich der örtlichen Position, an dem die Reflexion, die das Echo erzeugt, stattgefunden hat, enthält und einen Nachbarschaftsindikator (NI) aufweist, wobei der Nachbarschaftsindikator (NI) einen Wert aufweist, der der Anzahl der aufgrund der Nachbarschaftsregel erkannten Nachbarechos (NE) entspricht;

g) Vergleichen der Werte der Nachbarschaftsindikatoren (NI) der Detektionsliste mit einem Schwellwert (SW) und Durchführen der Parklückenerkennung basierend auf denjenigen Echos, deren Nachbarschaftsindikator (NI) größer als der Schwellwert (SW) ist (S26).

8. System nach Anspruch 7, **dadurch gekennzeichnet, dass** die Recheneinheit dazu ausgebildet ist, den Azimutwinkel basierend auf der Radialgeschwindigkeit des Fahrzeugs (1) relativ zu einem Objekt, an dem die das Echo erzeugende Reflexion auftritt, zu bestimmen.

9. System nach Anspruch 7 oder 8, **dadurch gekennzeichnet, dass** die Recheneinheit dazu ausgebildet ist, die Radialgeschwindigkeit des Fahrzeugs (1) basierend auf der Frequenzänderung des empfangenen Echos aufgrund des Doppler-Effekts zu ermitteln.

10. System nach Anspruch 7 oder 8, **dadurch gekennzeichnet, dass** die Recheneinheit dazu ausgebildet ist, die Radialgeschwindigkeit des Fahrzeugs (1) durch zeitliches Nachverfolgen mehrerer Echos zu ermitteln.

11. System nach einem der Ansprüche 7-10 **dadurch gekennzeichnet, dass** die Recheneinheit dazu ausgebildet ist, die örtliche Position, an der die Reflexion, die das Echo erzeugt, stattgefunden hat, durch Koordinaten anzugeben, die sich auf eine ortsfeste, nicht mit dem Fahrzeug (1) mitbewegte Position beziehen.

12. Fahrzeug umfassend ein System gemäß einem der Ansprüche 7-11.

**Claims**

1. Method for identifying parking spaces by means of at least one ultrasonic sensor (2) of a vehicle (1), comprising the following steps:

   a) creation of a detection list in a memory unit, wherein the detection list for received echoes in each case has a list region for the location at which the echo has occurred and a list region for an adjacency indicator (NI), wherein the adjacency indicator (NI) provides (S20) information regarding the number of adjacent echoes (NE) that have occurred in a defined adjacent region of the echo;
   b) emission of an ultrasonic signal by the ultrasonic sensor (2) of the vehicle (1) (S21);
   c) reception of an echo in the form of a reflected signal component of the ultrasonic signal by the ultrasonic sensor (2) (S22);
   d) determination of the azimuth angle from which the echo was received (S23);
   e) determination of the local position at which the reflection that generates the echo took place, based on the propagation time of the ultrasonic signal between the emission of the ultrasonic signal and the reception of the echo and the azimuth angle (S24);
   f) modification of the detection list (S25) by:

   1. determination of the adjacent echoes (NE) of the received echo contained in the detection list based on an adjacency rule;
   2. for each detected adjacent echo (NE), increasing of the adjacency indicator (NI) of the respective identified adjacent echo (NE) by an incremental value, with the adjacency indicator (NI) being increased by a variable value for each adjacent echo (NE) located in the adjacent region of a received echo, wherein the variable value depends on the distance between the received echo and the corresponding adjacent echo and/or on the amplitude of the echo;
   3. adding an entry regarding the received echo to the detection list, where the entry contains information regarding the local position at which the reflection that generates the echo took place and has an adjacency indicator, wherein the adjacency indicator (NI) has a value equal to the number of adjacent echoes identified by the adjacency rule;

   g) comparison of the values of the adjacency indicators in the detection list with a threshold value and performance of parking gap identification based on those echoes whose adjacency indicator is greater than the threshold value (S26).

2. Method according to Claim 1, **characterized in that** the azimuth angle is determined based on the radial velocity of the vehicle (1) relative to an object at which the reflection occurs.

3. Method according to Claim 2, **characterized in that** the radial velocity of the vehicle (1) is ascertained based on the change in frequency of the received echo due to the Doppler effect.

4. Method according to Claim 2, **characterized in that** the radial velocity of the vehicle (1) is ascertained by chronologically tracking multiple echoes.

5. Method according to any one of the preceding claims, **characterized in that** the local position at which the reflection that the echo generates took place is indicated by coordinates that refer to a stationary position that is not moved together with the vehicle (1).

6. Method according to any one of the preceding claims, **characterized in that** the adjacent region is defined by a circle having a predetermined radius around the local position at which the reflection that the echo generates took place.

7. System for identifying parking spaces, comprising at least one ultrasonic sensor (2), a computation unit and a memory unit that is configured to evaluate the information provided by the ultrasonic sensor (2), wherein the system is configured to execute the following steps:

a) creation of a detection list in a memory unit, wherein the detection list for received echoes in each case has a list region for the location at which the echo has occurred and a list region for an adjacency indicator (NI), wherein the adjacency indicator (NI) provides (S20) information regarding the number of adjacent echoes (NE) that have occurred in a defined adjacent region of the echo;

b) emission of an ultrasonic signal by an ultrasonic sensor (2) of the vehicle (1) (S21);

c) reception of an echo in the form of a reflected signal component of the ultrasonic signal by the ultrasonic sensor (2) (S22);

d) determination of the azimuth angle from which the echo was received (S23);

e) determination of the local position at which the reflection that generates the echo took place, based on the propagation time of the ultrasonic signal between the emission of the ultrasonic signal and the reception of the echo and the azimuth angle (S24);

f) modification of the detection list (S25) by:

1. determination of the adjacent echoes (NE) of the received echo contained in the detection list based on an adjacency rule;

2. for each detected adjacent echo (NE), increasing of the adjacency indicator (NI) of the respective identified adjacent echo (NE) by an incremental value, with the adjacency indicator (NI) being increased by a variable value for each adjacent echo (NE) located in the adjacent region of a received echo, wherein the variable value depends on the distance between the received echo and the corresponding adjacent echo and/or on the amplitude of the echo;

3. adding an entry regarding the received echo to the detection list, where the entry contains information regarding the local position at which the reflection that generates the echo took place and has an adjacency indicator (NI), wherein the adjacency indicator (NI) has a value equal to the number of adjacent echoes (NE) identified by the adjacency rule;

g) comparison of the values of the adjacency indicators (NI) in the detection list with a threshold value (SW) and performance of parking gap identification based on those echoes whose adjacency indicator (NI) is greater than the threshold value (SW) (S26).

8. System according to Claim 7, **characterized in that** the computation unit is designed to determine the azimuth angle based on the radial velocity of the vehicle (1) relative to an object at which the reflection that generates the echo occurs.

9. System according to Claim 7 or 8, **characterized in that** the computation unit is designed to ascertain the radial velocity of the vehicle (1) based on the change in frequency of the received echo due to the Doppler effect.

10. System according to Claim 7 or 8, **characterized in that** the computation unit is designed to ascertain the radial velocity of the vehicle (1) by chronologically tracking multiple echoes.

11. System according to any one of Claims 7-10, **characterized in that** the computation unit is designed to use coordinates that refer to a stationary position that is not moved together with the vehicle (1) to indicate the local position at which the reflection that the echo generates has taken place.

12. Vehicle comprising a system according to any one of Claims 7-11.

**Revendications**

1. Procédé permettant d'identifier des places de stationnement au moyen d'au moins un capteur à ultrasons (2) d'un véhicule (1), comprenant les étapes suivantes consistant à :

a) créer une liste de détection dans une unité de mémoire, la liste de détection comportant respectivement, pour chaque écho reçu, une zone de liste pour l'emplacement où l'écho s'est produit et une zone de liste pour un indicateur de voisinage (NI), l'indicateur de voisinage (NI) fournissant des informations concernant le nombre d'échos voisins (NE) qui se sont produits dans une zone de voisinage définie de l'écho (S20) ;
b) émettre un signal ultrasonore par le capteur à ultrasons (2) du véhicule (1) (S21) ;
c) recevoir un écho sous la forme d'une composante de signal réfléchie du signal ultrasonore par le capteur à ultrasons (2) (S22) ;
d) déterminer l'angle d'azimut à partir duquel l'écho a été reçu (S23) ;
e) déterminer la position locale où la réflexion générant l'écho a eu lieu, sur la base du temps de propagation du signal ultrasonore entre l'émission du signal ultrasonore et la réception de l'écho, et de l'angle d'azimut (S24) ;
f) modifier la liste de détection (S25) par :

    1. la détermination des échos voisins (NE) de l'écho reçu contenus dans la liste de détection sur la base d'une règle de voisinage ;
    2. pour chaque écho voisin (NE) détecté, l'augmentation de l'indicateur de voisinage (NI) de l'écho voisin (NE) détecté respectif d'une valeur incrémentale, l'indicateur de voisinage (NI) étant augmenté d'une valeur variable pour chaque écho voisin (NE) qui se trouve dans la zone de voisinage d'un écho reçu, la valeur variable dépendant de la distance de l'écho reçu par rapport à l'écho voisin respectif et/ou de l'amplitude de l'écho ;
    3. l'ajout d'une entrée concernant l'écho reçu à la liste de détection, l'entrée contenant des informations concernant la position locale où la réflexion générant l'écho a eu lieu, et comportant un indicateur de voisinage, l'indicateur de voisinage (NI) ayant une valeur qui correspond au nombre d'échos voisins détectés sur la base de la règle de voisinage ;

    g) comparer les valeurs des indicateurs de voisinage de la liste de détection à une valeur seuil et effectuer la reconnaissance de place de stationnement sur la base des échos dont l'indicateur de voisinage est supérieur à la valeur seuil (S26).

2. Procédé selon la revendication 1, **caractérisé en ce que** l'angle d'azimut est déterminé sur la base de la vitesse radiale du véhicule (1) par rapport à un objet sur lequel la réflexion se produit.

3. Procédé selon la revendication 2, **caractérisé en ce que** la vitesse radiale du véhicule (1) est déterminée sur la base de la variation de fréquence de l'écho reçu due à l'effet Doppler.

4. Procédé selon la revendication 2, **caractérisé en ce que** la vitesse radiale du véhicule (1) est déterminée par le suivi temporel de plusieurs échos.

5. Procédé selon l'une quelconque des revendications précédentes, **caractérisé en ce que** la position locale où la réflexion générant l'écho a eu lieu est indiquée par des coordonnées qui se rapportent à une position fixe ne se déplaçant pas avec le véhicule (1).

6. Procédé selon l'une quelconque des revendications précédentes, **caractérisé en ce que** la zone de voisinage est définie par un cercle ayant un rayon prédéfini autour de la position locale où la réflexion générant l'écho a eu lieu.

7. Système permettant d'identifier des places de stationnement, comprenant au moins un capteur à ultrasons (2) et une unité de calcul qui est réalisée pour évaluer les informations fournies par le capteur à ultrasons (2), le système étant réalisé pour effectuer les étapes suivantes consistant à :

    a) créer une liste de détection dans une unité de mémoire, la liste de détection comportant respectivement, pour chaque écho reçu, une zone de liste pour l'emplacement où l'écho s'est produit et une zone de liste pour un indicateur de voisinage (NI), l'indicateur de voisinage (NI) fournissant des informations concernant le nombre d'échos voisins (NE) qui se sont produits dans une zone de voisinage définie de l'écho (S20) ;
    b) émettre un signal ultrasonore par un capteur à ultrasons (2) du véhicule (1) (S21) ;
    c) recevoir un écho sous la forme d'une composante de signal réfléchie du signal ultrasonore par le capteur à ultrasons (2) (S22) ;
    d) déterminer l'angle d'azimut à partir duquel l'écho a été reçu (S23) ;
    e) déterminer la position locale où la réflexion générant l'écho a eu lieu, sur la base du temps de propagation du signal ultrasonore entre l'émission du signal ultrasonore et la réception de l'écho, et de l'angle d'azimut (S24) ;
    f) modifier la liste de détection (S25) par :

        1. la détermination des échos voisins (NE) de l'écho reçu contenus dans la liste de détection sur la base d'une règle de voisinage ;
        2. pour chaque écho voisin (NE) détecté, l'augmentation de l'indicateur de voisinage (NI) de l'écho voisin (NE) détecté respectif d'une valeur incrémentale, l'indicateur de voisinage (NI) étant augmenté d'une valeur variable pour chaque écho voisin (NE) qui se trouve dans la zone de voisinage d'un écho reçu, la valeur variable dépendant de la distance de l'écho reçu par rapport à l'écho voisin respectif et/ou de l'amplitude de l'écho ;

3. l'ajout d'une entrée concernant l'écho reçu à la liste de détection, l'entrée contenant des informations concernant la position locale où la réflexion générant l'écho a eu lieu, et comportant un indicateur de voisinage (NI), l'indicateur de voisinage (NI) ayant une valeur qui correspond au nombre des échos voisins (NE) détectés sur la base de la règle de voisinage ;

g) comparer les valeurs des indicateurs de voisinage (NI) de la liste de détection à une valeur seuil (SW) et effectuer la reconnaissance de place de stationnement sur la base des échos dont l'indicateur de voisinage (NI) est supérieur à la valeur seuil (SW) (S26).

8. Système selon la revendication 7, **caractérisé en ce que** l'unité de calcul est configurée pour déterminer l'angle d'azimut sur la base de la vitesse radiale du véhicule (1) par rapport à un objet sur lequel la réflexion générant l'écho se produit.

9. Système selon la revendication 7 ou 8, **caractérisé en ce que** l'unité de calcul est réalisée pour déterminer la vitesse radiale du véhicule (1) sur la base de la variation de fréquence de l'écho reçu due à l'effet Doppler.

10. Système selon la revendication 7 ou 8, **caractérisé en ce que** l'unité de calcul est réalisée pour déterminer la vitesse radiale du véhicule (1) par le suivi temporel de plusieurs échos.

11. Système selon l'une quelconque des revendications 7 à 10, **caractérisé en ce que** l'unité de calcul est réalisée pour indiquer la position locale où la réflexion générant l'écho a eu lieu par des coordonnées qui se rapportent à une position fixe ne se déplaçant pas avec le véhicule (1).

12. Véhicule comprenant un système selon l'une quelconque des revendications 7-11.

Fig. 1

Fig. 2

Fig. 3

```
                    ┌──────────────┐
                    │    Start     │
                    └──────┬───────┘
                           │                          ╭─ S10
                    ┌──────▼─────────────────────┐
                    │ Empfangen eines Ultraschallechos │
                    └──────┬─────────────────────┘
                           │                          ╭─ S11
                    ┌──────▼─────────────────────┐
                    │ Berechnen der Koordinaten des │
                    │ Reflexionsortes des Ultraschallechos │
                    └──────┬─────────────────────┘
                           │                          ╭─ S12
                    ┌──────▼─────────────────────┐
                    │ Bestimmen der Nachbaschaftsechos NE │
                    └──────┬─────────────────────┘
```

Für alle NE:

Erhöhen des Nachbarschaftsindikators NI;   S13

NI > SW   S14

ja

Ausgeben des Nachbarschafts-echos   S15

Setzen des Nachbaschaftsidikators des Ultraschallechos gemäß der Anzahl der Nachbarschaftsechos   S16

NI > SW   S17

ja

Ausgeben des Ultraschallechos   S18

nein

Aufnehmen des Ultraschallechos in die Detektionsliste   S19

Ende

Fig. 4

Fig. 5

S20 — Anlegen einer Detektionsliste

S21 — Aussenden eines Ultraschallsignals

S22 — Empfangen eines Echos des Ultraschallsignals

S23 — Bestimmen des Azimutwinkels des Echos

S24 — Bestimmen der örtlichen Position, an der die Reflexion stattgefunden hat

S25 — Modifizieren der Detektionsliste

S26 — Vergleichen der Werte der Nachbarschaftsindikatoren der Detektionsliste mit einem Schwellwert und Durchführen der Parklückenerkennung basierend auf denjenigen Echos, deren Nachbarschaftsindikator größer als der Schwellwert ist

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102019111569 A1